(19) Europäisches Patentamt
European Patent Office
Office européen des brevets

(11) **EP 4 496 395 A1**

(12) **EUROPEAN PATENT APPLICATION**
published in accordance with Art. 153(4) EPC

(43) Date of publication:
**22.01.2025  Bulletin 2025/04**

(21) Application number: **23794987.0**

(22) Date of filing: **07.04.2023**

(51) International Patent Classification (IPC):
*H04W 56/00* (2009.01)   *H04W 74/00* (2009.01)

(52) Cooperative Patent Classification (CPC):
**H04W 56/00; H04W 74/00; H04W 74/08**

(86) International application number:
**PCT/CN2023/086981**

(87) International publication number:
**WO 2023/207554 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022  CN 202210455597**

(71) Applicant: **Huawei Technologies Co., Ltd.
Shenzhen, Guangdong 518129 (CN)**

(72) Inventor: **FAN, Bo
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **METHOD AND APPARATUS FOR ACQUIRING TIMING ADVANCE**

(57)    A timing advance obtaining method and an apparatus are provided, so that a terminal device can obtain a TA of a non-serving cell, to accurately perform uplink transmission in the non-serving cell. After receiving first information sent by a network device, the terminal device sends a random access preamble corresponding to a first cell to the network device based on the first information, where the first information indicates the terminal device to perform random access to the first cell, and the first cell is a non-serving cell. After determining a first TA of the first cell based on the random access preamble, the network device sends a random access response message including the first TA to the terminal device, so that the terminal device obtains the TA of the non-serving cell, to accurately perform uplink transmission in the non-serving cell.

FIG. 5

EP 4 496 395 A1

## Description

### CROSS-REFERENCE TO RELATED APPLICATIONS

This application claims priority to Chinese Patent Application No. 202210455597.3, filed with the China National Intellectual Property Administration on April 27, 2022 and entitled "TIMING ADVANCE OBTAINING METHOD AND APPARATUS", which is incorporated herein by reference in its entirety.

### TECHNICAL FIELD

This application relates to the field of communication technologies, and in particular, to a timing advance (timing advance, TA) obtaining method and an apparatus.

### BACKGROUND

In a 5th generation (5th generation, 5G) mobile communication system, a slot is used as a basic time unit in uplink and downlink transmission. In other words, data transmission is performed once in each slot. A slot start moment of a network device is fixed, and uplink and downlink slots are aligned. An uplink slot start moment and a downlink slot start moment of a terminal device need to be determined based on the slot start moment of the network device and propagation time between the network device and the terminal device. It is assumed that the signal propagation time between the network device and the terminal device is T. Currently, the uplink slot start moment of the terminal device is earlier than the downlink slot start moment of the terminal device by 2T. A time difference (namely, 2T) between the uplink slot start moment and the downlink slot start moment of the terminal device is also referred to as a TA. For downlink transmission, the terminal device determines the downlink slot start moment of the terminal device by measuring a downlink pilot signal, and receives a downlink signal based on the downlink slot start moment. For uplink transmission, the terminal device needs to determine the TA, and determine the uplink slot start moment based on the TA and the downlink slot start moment (that is, the downlink slot start moment-TA), to send an uplink signal.

The TA is a cell-level parameter. Each cell has a corresponding TA value. The network device may perform data transmission with the terminal device via one or more cells. These cells may be classified into two types: a serving cell and a non-serving cell. However, currently, the terminal device can determine only a TA of the serving cell, and a method for obtaining a TA of the non-serving cell is absent. Consequently, the terminal device cannot accurately perform uplink transmission in the non-serving cell.

## SUMMARY

This application provides a TA obtaining method and an apparatus, so that a terminal device can obtain a TA of a non-serving cell, to accurately perform uplink transmission in the non-serving cell.

According to a first aspect, this application provides a TA obtaining method. The method may be applied to a terminal device, a component (such as a processor, a chip, or a circuit) disposed in the terminal device, or a software module. The terminal device is used as an example for description. The method may include: After receiving first information from a network device, the terminal device sends a random access preamble corresponding to a first cell to the network device based on the first information, and receives a random access response message from the network device, where the random access response message includes a first TA corresponding to the first cell, the first information may indicate the terminal device to perform random access to the first cell, and the first cell is a non-serving cell of the terminal device. According to the method, the terminal device can obtain a TA of the non-serving cell, to accurately perform uplink transmission in the non-serving cell.

In a possible design, the first information may include one or more of the following: an identifier of the first cell, a synchronization signal/physical broadcast channel block (synchronization signal/physical broadcast channel PBCH block, SSB) identifier corresponding to the first cell, an identifier of the random access preamble, a random access channel occasion indication, or a physical random access channel mask index. The terminal device may determine, based on information in the first information, the corresponding random access preamble, the SSB and a random access channel occasion for sending the random access preamble, so that the terminal device successfully sends the random access preamble corresponding to the first cell.

In a possible design, before receiving the first information from the network device, the terminal device may receive configuration information of the first cell from the network device, where the configuration information may include one or more of the following: the identifier of the first cell, SSB information corresponding to the first cell, and random access information of the first cell. For example, the SSB information corresponding to the first cell may include one or more of the following: an SSB set, an SSB periodicity, or SSB transmit power. For example, the random access information of the first cell may include one or more of the following: random access preamble information, random access channel occasion information, or an association relationship between the SSB and the random access channel occasion. According to the foregoing method, the terminal device can accurately determine, with reference to the first information and the configuration information, the corresponding random access preamble, the SSB and the random access channel occasion for sending the random access preamble, so that the terminal device successfully sends the random access preamble corresponding to the first cell.

In a possible design, the terminal device may send the random access preamble corresponding to the first cell to the network device based on the first information by using the following method: The terminal device sends the random access preamble corresponding to the first cell to the network device based on the first information and the configuration information. In this way, the terminal device can accurately determine, with reference to the first information and the configuration information, the corresponding random access preamble, and the SSB and the random access channel occasion for sending the random access preamble, so that the terminal device successfully sends the random access preamble corresponding to the first cell.

In a possible design, the terminal device may send the random access preamble corresponding to the first cell to the network device based on the first information and the configuration information by using the following method: The terminal device determines a first SSB based on the first information and the configuration information; the terminal device determines a first random access channel occasion based on the first information, the configuration information, and the first SSB; and the terminal device further sends the random access preamble corresponding to the first cell to the network device based on the first SSB and the first random access channel occasion. In this way, the terminal device can accurately determine the SSB and the random access channel occasion for sending the random access preamble, to successfully send the random access preamble corresponding to the first cell.

In a possible design, the terminal device may determine the first SSB based on the first information and the configuration information by using the following method: The terminal device may determine the first SSB based on the identifier of the first cell and the SSB identifier corresponding to the first cell that are included in the first information, and the SSB set of the first cell included in the configuration information. In this way, the terminal device can accurately determine the SSB corresponding to the to-be-sent access preamble.

In a possible design, that the terminal device determines a first random access channel occasion based on the first information, the configuration information, and the first SSB may be implemented by using the following method: The terminal device may determine the first random access channel occasion based on the first SSB, the association relationship between the SSB and the random access channel occasion of the first cell included in the configuration information, and the physical random access channel mask index included in the first information. In this way, the terminal device can accurately determine the random access channel occasion corresponding to the to-be-sent access preamble.

In a possible design, the terminal device determines that a first uplink signal is transmitted by using a TA corresponding to the first cell; and then the terminal device sends the first uplink signal in the first cell based on the first TA. In this way, after obtaining the first TA of the first cell, the terminal device can accurately transmit an uplink signal of the first cell when the terminal device needs to transmit the uplink signal by using the TA corresponding to the first cell.

In a possible design, the terminal device may determine, in the following manner, that the first uplink signal is transmitted by using the TA corresponding to the first cell: When a control resource set pool index corresponding to the first uplink signal is equal to a first value, the terminal device determines that the first uplink signal is transmitted by using the TA corresponding to the first cell; or when a cell identifier included in a transmission configuration indicator state (transmission configuration indicator state, TCI-state) corresponding to the first uplink signal is the identifier of the first cell, the terminal device determines that the first uplink signal is transmitted by using the TA corresponding to the first cell. The terminal device can flexibly determine, in the foregoing plurality of manners, that the first uplink signal is transmitted by using the TA corresponding to the first cell, to accurately transmit the uplink signal of the first cell.

In a possible design, the terminal device receives second information from the network device, where the second information indicates a TA change amount of the first cell. In this way, the terminal device may update, based on the TA change amount of the first cell, the TA corresponding to the first cell, so that the terminal device performs uplink transmission by using an accurate TA of the first cell.

In a possible design, that the second information indicates a TA change amount of the first cell may be implemented by using the following method: If a timing advance group (TA group, TAG) identity in the second information is a first TAG identity, a TA change amount indicated by the second information is the TA change amount of the first cell; if a logical channel identifier (logical channel ID, LCID) corresponding to the second information is a first LCID, a TA change amount indicated by the second information is the TA change amount of the first cell; if a control resource set pool index corresponding to the second information is equal to a second value, a TA change amount indicated by the second information is the TA change amount of the first cell; or if a cell identifier in the second information is the identifier of the first cell, a TA change amount indicated by the second information is the TA change amount of the first cell. In this way, the second information can flexibly indicate the TA change amount of the first cell in a plurality of manners, so that the terminal device updates, based on the TA change amount of the first cell, the TA corresponding to the first cell, and further, the terminal device performs uplink transmission by using the accurate TA of the first cell.

In a possible design, the first TAG identity may be a TAG identity of a non-serving cell defined in a protocol; or the first TAG identity may be a TAG identity configured by the network device for a non-serving cell.

In a possible design, the first information includes a first field, and the first field is used to select one non-serving cell from a plurality of configured non-serving cells; or the first field is used to select one cell from a plurality of configured non-serving cells and a cell through which the first information is sent.

In a possible design, when a cell selected by using the first field is a non-serving cell, the non-serving cell is the first cell.

In a possible design, the first information includes a second field, and the second field is used to select one cell from a cell through which the first information is sent and one currently active non-serving cell.

In a possible design, when a cell selected by using the second field is the currently active non-serving cell, the currently active non-serving cell is the first cell.

In a possible design, the first information includes the first field or the second field when one or a combination of the following conditions is met:

    The network device configures a non-serving cell for
    the terminal device;
    the network device configures two control resource
    set CORESET groups for the terminal device;
    the network device configures presence of the first
    field or the second field; and
    the network device configures that the terminal device uses lower layer signaling-based cell handover.

According to a second aspect, this application provides a TA obtaining method. The method may be applied to a network device, a component (such as a processor, a chip, or a circuit) disposed in the network device, or a software module. The network device is used as an example for description. The method may include: After sending first information to a terminal device, the network device receives, from the terminal device, a random access preamble corresponding to a first cell, determines a first TA of the first cell based on the random access preamble, and then sends a random access response message to the terminal device, where the random access response message includes the first TA, the first information indicates the terminal device to perform random access to the first cell, and the first cell is a non-serving cell of the terminal device. According to the method, the terminal device can obtain a TA of the non-serving cell, to accurately perform uplink transmission in the non-serving cell.

In a possible design, the first information may include one or more of the following: an identifier of the first cell, a synchronization signal/physical broadcast channel block SSB identifier corresponding to the first cell, an identifier of the random access preamble, a random access channel occasion indication, or a physical random access channel mask index. The terminal device may determine, based on information in the first information, the corresponding random access preamble, an SSB and a random access channel occasion for sending the random access preamble, so that the terminal device successfully sends the random access preamble corresponding to the first cell.

In a possible design, before the network device sends the first information to the terminal device, the network device may send configuration information of the first cell to the terminal device, where the configuration information may include one or more of the following: the identifier of the first cell, synchronization signal/physical broadcast channel block SSB information corresponding to the first cell, and random access information of the first cell. For example, the SSB information corresponding to the first cell may include one or more of the following: an SSB set, an SSB periodicity, or SSB transmit power. For example, the random access information of the first cell may include one or more of the following: random access preamble information, random access channel occasion information, or an association relationship between an SSB and a random access channel occasion. According to the foregoing method, the terminal device can accurately determine, with reference to the first information and the configuration information, the corresponding random access preamble, the SSB and the random access channel occasion for sending the random access preamble, so that the terminal device successfully sends the random access preamble corresponding to the first cell.

In a possible design, the network device may receive a first uplink signal in the first cell based on the first TA, where the first uplink signal is transmitted by using a TA corresponding to the first cell. In this way, the network device can receive accurate uplink transmission of the first cell.

In a possible design, when a control resource set pool index corresponding to the first uplink signal is equal to a first value, the first uplink signal is transmitted by using the TA corresponding to the first cell; or when a cell identifier included in a transmission configuration indicator state TCI-state corresponding to the first uplink signal is the identifier of the first cell, the first uplink signal is transmitted by using the TA corresponding to the first cell. In this way, that the first uplink signal is transmitted by using the TA corresponding to the first cell may be flexibly determined in the foregoing plurality of manners.

In a possible design, after determining a TA change amount of the first cell, the network device sends second information to the terminal device, where the second information indicates the TA change amount of the first cell. In this way, the terminal device may update, based on the TA change amount of the first cell, the TA corresponding to the first cell, so that the terminal device performs uplink transmission by using an accurate TA of the first cell.

In a possible design, that the second information indicates the TA change amount of the first cell may be implemented by using the following method: If a timing advance group TAG identity in the second information is a first TAG identity, a TA change amount indicated by the second information is the TA change amount of the first cell; if a logical channel identifier LCID corresponding to the second information is a first LCID, a TA change amount indicated by the second information is the TA change amount of the first cell; if a control resource set pool index corresponding to the second information is equal to a second value, a TA change amount indicated by the second information is the TA change amount of the first cell; or if a cell identifier in the second information is the identifier of the first cell, a TA change amount indicated by the second information is the TA change amount of the first cell. In this way, the second information can flexibly indicate the TA change amount of the first cell in a plurality of manners, so that the terminal device updates, based on the TA change amount of the first cell, the TA corresponding to the first cell, and further, the terminal device performs uplink transmission by using an accurate TA of the first cell.

In a possible design, the first TAG identity is a TAG identity of a non-serving cell defined in a protocol; or the first TAG identity is a TAG identity configured by the network device for a non-serving cell.

In a possible design, the first information includes a first field, and the first field is used to select one non-serving cell from a plurality of configured non-serving cells; or the first field is used to select one cell from a plurality of configured non-serving cells and a cell through which the first information is sent.

In a possible design, when a cell selected by using the first field is a non-serving cell, the non-serving cell is the first cell.

In a possible design, the first information includes a second field, and the second field is used to select one cell from a cell through which the first information is sent and one currently active non-serving cell.

In a possible design, when a cell selected by using the second field is the currently active non-serving cell, the currently active non-serving cell is the first cell.

In a possible design, the first information includes the first field or the second field when one or a combination of the following conditions is met:

> The network device configures a non-serving cell for the terminal device;
> the network device configures two control resource set CORESET groups for the terminal device;
> the network device configures presence of the first field or the second field; and
> the network device configures that the terminal device uses lower-layer signaling-based cell handover.

According to a third aspect, this application further provides a communication apparatus. The communication apparatus may be a terminal device, and the communication apparatus has functions of implementing the method in the first aspect or the possible design examples of the first aspect. The functions may be implemented by hardware, or may be implemented by executing corresponding software by hardware. The hardware or software includes one or more modules corresponding to the foregoing functions.

In a possible design, a structure of the communication apparatus may include a transceiver unit and a processing unit. The units may perform corresponding functions in the first aspect or the possible design examples of the first aspect. For details, refer to detailed descriptions in the method examples. Details are not described herein again.

In a possible design, the structure of the communication apparatus includes a transceiver and a processor, and optionally further includes a memory. The transceiver is configured to: receive and send data, a message, information, or the like, and communicate and interact with another device in a communication system. The processor is configured to support the communication apparatus in performing the corresponding functions in the first aspect or the possible design examples of the first aspect. The memory is coupled to the processor, and the memory stores program instructions and data that are necessary for the communication apparatus.

According to a fourth aspect, this application further provides a communication apparatus. The communication apparatus may be a network device, and the communication apparatus has functions of implementing the method in the second aspect or the possible design examples of the second aspect. The functions may be implemented by hardware, or may be implemented by executing corresponding software by hardware. The hardware or software includes one or more modules corresponding to the foregoing functions.

In a possible design, a structure of the communication apparatus may include a transceiver unit and a processing unit. The units may perform corresponding functions in the second aspect or the possible design examples of the second aspect. For details, refer to detailed descriptions in the method examples. Details are not described herein again.

In a possible design, the structure of the communication apparatus includes a transceiver and a processor, and optionally further includes a memory. The transceiver is configured to: receive and send data, a message, information, or the like, and communicate and interact with another device in a communication system. The processor is configured to support the communication apparatus in performing the corresponding functions in the second aspect or the possible design examples of the second aspect. The memory is coupled to the processor, and the memory stores program instructions and data that are necessary for the communication apparatus.

According to a fifth aspect, an embodiment of this application provides a communication system, and the communication system may include the terminal device, the network device, and the like mentioned above.

According to a sixth aspect, an embodiment of this application provides a computer-readable storage medium, where the computer-readable storage medium stores program instructions, and when the program instructions are run on a computer, the computer is enabled to perform the method in any one of the first aspect and the possible designs of the first aspect in embodiments of this application, or the method any one of the second aspect and the possible designs of the second aspect in embodiments of this application. For example, the computer-readable storage medium may be any usable medium that can be accessed by the computer. By way of example rather than limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including instructions. When the instructions are run on a computer, the method in any one of the first aspect or the possible designs of the first aspect, or the method in any one of the second aspect or the possible designs of the second aspect is performed.

According to an eighth aspect, this application further provides a chip, including a processor. The processor is coupled to a memory, and is configured to read and execute program instructions stored in the memory, so that the chip implements the method in any one of the first aspect or the possible designs of the first aspect, and the method in any one of the second aspect or the possible designs of the second aspect.

For the third aspect to the eighth aspect and technical effects that can be achieved in the third aspect to the eighth aspect, refer to descriptions of technical effects that can be achieved in the first aspect or the possible solutions in the first aspect, or the second aspect or the possible solutions in the second aspect. Details are not described herein again.

**BRIEF DESCRIPTION OF DRAWINGS**

FIG. 1 is a diagram of an architecture of a communication system according to this application;
FIG. 2 is a diagram of a TA according to this application;
FIG. 3 is a diagram of TAs corresponding to a cell 1 and a cell 2 according to this application;
FIG. 4 is a diagram of a format of a MAC CE according to this application;
FIG. 5 is a schematic flowchart of a TA obtaining method according to this application;
FIG. 6 is a diagram of a format of a random access response message according to this application;
FIG. 7 is a diagram of a structure of a communication apparatus according to this application;
FIG. 8 is a diagram of a structure of another communication apparatus according to this application; and
FIG. 9 is a diagram of a structure of a communication apparatus according to this application.

**DESCRIPTION OF EMBODIMENTS**

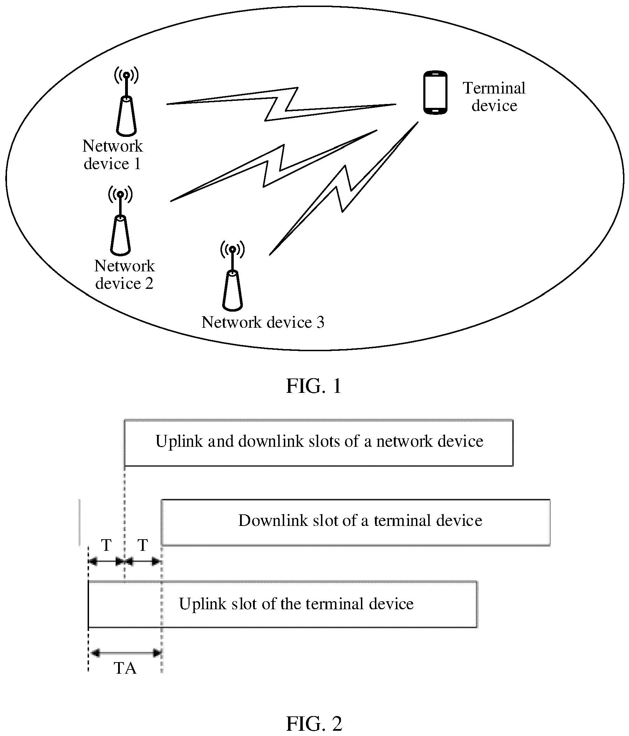

The following further describes in detail this application with reference to accompanying drawings.
Embodiments of this application provide a TA obtaining method and an apparatus, so that a terminal device can obtain a TA of a non-serving cell, to accurately perform uplink transmission in the non-serving cell. The method and the apparatus in this application are based on a same technical concept. Because the method and the apparatus have a similar principle for resolving a problem, mutual reference may be made between implementations of the apparatus and implementations of the method. Repeated parts are not described in detail again.
In descriptions of this application, terms such as "first" and "second" are merely used for distinguishing between descriptions, but cannot be understood as indicating or implying relative importance, or cannot be understood as indicating or implying a sequence.
In the descriptions of this application, "at least one (type or item)" means one (type or item) or more (types or items), and "a plurality of (types or items)" means two (types or items) or more (types items). "At least one of the following items" or a similar expression thereof means any combination of these items, including any combination of singular items or plural items. For example, at least one item of a, b, or c may indicate a, b, c, a and b, a and c, b and c, or a, b and c, where a, b, and c may be singular or plural.
In the descriptions of this application, the term "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.
To describe the technical solutions in embodiments of this application more clearly, the following describes in detail a TA obtaining method and an apparatus provided in embodiments of this application with reference to the accompanying drawings.
A communication system to which embodiments of this application are applicable may include a plurality of network devices and one or more terminal devices. For example, FIG. 1 shows an architecture of a communication system to which an embodiment of this application is applicable. The architecture of the communication system includes a plurality of network devices and one terminal device. FIG. 1 shows three network devices (for example, a network device 1, a network device 2, and a network device 3 in FIG. 1). In FIG. 1, the plurality of network devices may simultaneously perform transmission with one terminal device.

The network device may be a device having a wireless transceiver function, a chip or a chip system that can be disposed in the network device, or the like. The network device includes but is not limited to a base station (evolutional NodeB, eNB or eNodeB), a NodeB (generation NodeB, gNB), a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), a radio controller in a cloud radio access network (cloud radio access network, CRAN) scenario, or the like, or may be a network node forming a gNB or a transmission point, for example, a baseband unit (BBU) or a distributed unit (distributed unit, DU).

In some deployments, the gNB may include a central unit (central unit, CU) and a DU. The gNB may further include a radio frequency unit (radio unit, RU). The CU implements a part of functions of the gNB, and the DU implements a part of functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer finally becomes information at the PHY layer or is transformed from information at the PHY layer. Therefore, in such an architecture, it may be considered that higher layer signaling such as RRC layer signaling or PHCP layer signaling is sent by the DU or is sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited.

The terminal device may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a wireless data card, a personal digital assistant (personal digital assistant, PDA) computer, a tablet computer (Pad), a computer having a wireless transceiver function, a wireless modem (modem), a handset (handset), a laptop computer (laptop computer), a machine type communication (machine type communication, MTC) terminal, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), an intelligent wearable device (smart glasses, a smart watch, a smart headset, and the like), a wireless terminal in a smart home (smart home), or the like, or may be a chip, a chip module (or a chip system), or the like that can be disposed in the foregoing devices. An application scenario is not limited in embodiments of this application. The terminal device having a wireless transceiver function, a chip or a chip system that can be disposed in the foregoing terminal device, and the like are collectively referred to as terminal devices in this application.

It should be noted that the communication system shown in FIG. 1 may be but is not limited to a 4th Generation (4th Generation, 4G) system or a 5th Generation (5th Generation, 5G) system, for example, a new generation radio access technology (new radio access technology, NR). Optionally, the method in embodiments of this application is further applicable to various future communication systems, for example, a 6th Generation (6th Generation, 6G) system or another communication network.

It should be noted that a quantity of and types of devices shown in the communication system shown in FIG. 1 are merely examples. There may be more devices in the communication system, for example, a core network device, which is not shown in FIG. 1.

Currently, in 5G, a slot is used as a basic time unit in both uplink and downlink transmission. In other words, data transmission is performed once in each slot. A slot start moment of a network device is fixed, and uplink and downlink slots are aligned. An uplink slot start moment and a downlink slot start moment of a terminal device need to be determined based on the slot start moment of the network device and propagation time between the network device and the terminal device. As shown in FIG. 2, because the signal propagation time between the network device and the terminal device is T, a signal sent by the network device at a time point t is not received on a terminal device side until t+T. Therefore, a downlink slot start moment of the terminal device is later than a downlink slot start moment of the network device by time T. In addition, because the signal propagation time between the network device and the terminal device is T, a signal sent by the terminal device at a time point t-T is not received on a network device side until t. Therefore, an uplink slot start moment of the terminal device is earlier than an uplink slot start moment of the network device by time T. Therefore, the uplink slot start moment of the terminal device is earlier than the downlink slot start moment of the terminal device by 2T. A time difference (namely, 2T) between the uplink slot start moment and the downlink slot start moment is also referred to as a timing advance (timing advance, TA). For downlink transmission, the terminal device determines the downlink slot start moment of the terminal device by measuring a downlink pilot signal, and receives a downlink signal based on the downlink slot start moment. For uplink transmission, the terminal device needs to determine the TA, and determine the uplink slot start moment based on the TA and the downlink slot start moment (that is, the downlink slot start moment-TA), to send an uplink signal.

Steps of obtaining the TA may include two steps: obtaining an initial TA and adjusting the TA. The initial TA is obtained by using a random access (random access channel, RACH) process. Specifically, the terminal device sends a preamble (preamble) signal to the network device, and the preamble signal is sent based on a downlink slot. In other words, the terminal device starts to send the preamble at the downlink slot start moment of the terminal device. Because the downlink slot start moment of the terminal device is later than the downlink slot start moment of the network device by time T, and the preamble further needs time T to reach the network device, a time point at which the preamble is received is later than the uplink slot start moment of the network device by time 2T, where 2T is the TA of the terminal device. The network device determines the TA by measuring the preamble, and sends the determined TA to the terminal device. The terminal device may determine a corresponding TA value, and perform transmission by using the TA in subsequent uplink transmission. As the terminal device moves, the TA value may change. Therefore, the TA further needs to be adjusted. Specifically, the network device may determine a TA change amount of the terminal device by using an uplink pilot signal sent by the terminal device, and send the TA change amount to the terminal device by using medium access control-control element (medium access control-control element, MAC CE) signaling. The terminal device adjusts, by using the TA change amount, the TA value maintained by the terminal device. In this way, the TA value of the terminal device may be updated.

The TA is a cell-level parameter. Each cell has a corresponding TA value. The network device may perform data transmission with the terminal device via one or more cells. These cells may be classified into two types: a serving cell and a non-serving cell. The serving cell (serving cell) is a cell configured for the terminal device to perform carrier aggregation (carrier aggregation, CA), where the carrier aggregation is also referred to as a carrier component (Carrier component, CC). The network device needs to configure a detailed parameter of the serving cell for the terminal device. The non-serving cell is a cell other than the serving cell. Before R17, a 5G protocol does not support data transmission for the terminal device by using the non-serving cell. In R17, a mechanism for performing data transmission based on the non-serving cell is introduced. For the non-serving cell, the network device does not need to configure all detailed parameters of the cell for the terminal device, but only needs to configure related information of a synchronization signal/physical broadcast channel block (synchronization signal/physical broadcast channel PBCH block, SSB) of the non-serving cell for the terminal device. Each non-serving cell also corresponds to one physical cell identifier (physical cell ID, PCI). The PCI corresponding to the non-serving cell may be referred to as an additional PCI (additional PCI).

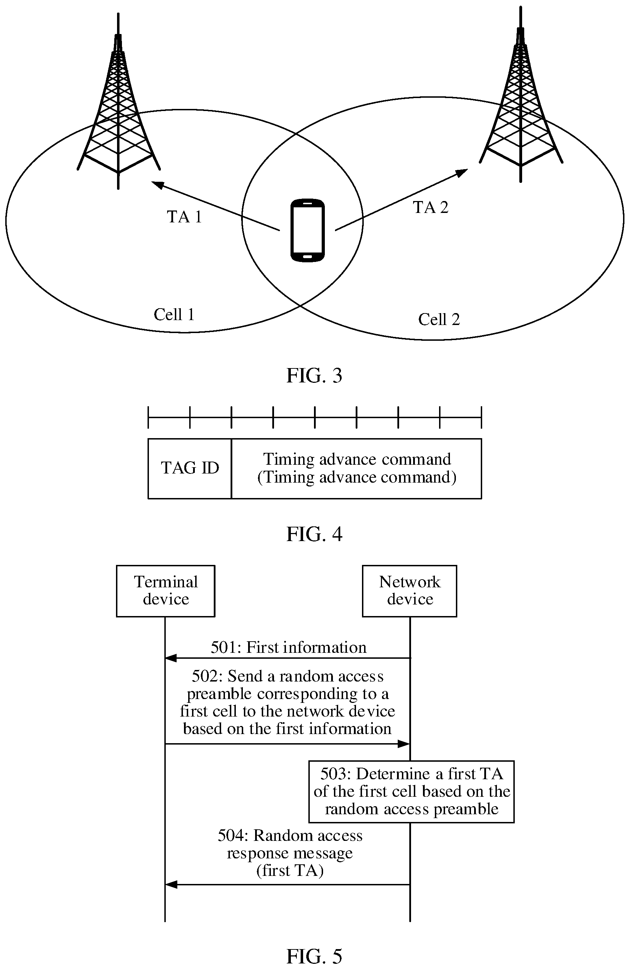

For each cell (regardless of the serving cell or the non-serving cell), if the terminal device transmits an uplink signal to the network device via the cell, a corresponding TA needs to be used. Therefore, the terminal device needs to learn of a TA corresponding to each cell. TAs corresponding to different cells may be different. This specifically depends on whether locations of network devices corresponding to these cells are the same. For example, as shown in FIG. 3, locations of a cell 1 and a cell 2 are different, and TAs corresponding to the two cells are usually different.

For the serving cell, a TA of the serving cell is determined by using the method described above. To be specific, an initial TA is determined through random access, and then the TA is adjusted based on a MAC CE. The TA of the serving cell is adjusted based on a timing advance group (TA group, TAG). The TAG corresponds to a group of cells that use a same TA value. Generally, a plurality of cells of a same network device belong to a same TAG and use a same TA value, and cells of different network devices belong to different TAGs and use different TA values. The network device sends the MAC CE to the terminal device, where the MAC CE is used to update a TA value of a specified TAG. A specific format of the MAC CE may be shown in FIG. 4. The MAC CE includes a TAG identity (identity, ID) field, where the TAG identity field indicates a specific TAG whose TA value is to be updated using the MAC CE. A timing advance command (Timing Advance command) field indicates a TA change amount. The terminal device adds the TA change amount to the current TA value of the TAG, to update the TA of the TAG.

For the non-serving cell, because the non-serving cell does not belong to any TAG, how the terminal device obtains a TA of the non-serving cell is a problem to be solved. For example, currently, the network device cannot trigger the terminal device to perform a random access process directed to the non-serving cell, to be specific, cannot indicate the terminal device to send a preamble to a network device of the non-serving cell to obtain an initial TA of the non-serving cell. In addition, because the non-serving cell does not belong to any TAG, a TA change amount of the non-serving cell cannot be indicated by using the MAC CE.

It can be learned from the foregoing descriptions that, currently, the terminal device can determine only the TA of the serving cell, and a method for obtaining the TA of the non-serving cell is absent. Consequently, the terminal device cannot accurately perform uplink transmission in the non-serving cell. In view of this, this application provides a TA obtaining method, so that a terminal device can obtain a TA of a non-serving cell, to accurately perform uplink transmission in the non-serving cell.

According to the foregoing descriptions, this application provides a TA obtaining method. Refer to FIG. 5. A specific procedure of the method may include the following steps.

Step 501: A network device sends first information to the terminal device, and correspondingly, the terminal device receives the first information from the network device. The first information indicates the terminal device to perform random access to a first cell, and the first cell is a non-serving cell of the terminal device.

That the first information indicates the terminal device to perform random access to a first cell may also be understood as that the first information indicates the terminal device to send a random access preamble corresponding to the first cell. The random access preamble may also be understood as a random access request, to be specific, a request for initiating random access by the terminal device to the network device.

For example, the first information may include one or more of the following: a cell identifier (for example, an identifier of the first cell), an SSB identifier (SSB ID) (for example, an SSB identifier corresponding to the first cell), an identifier of the random access preamble (preamble ID), a random access channel occasion (RACH occasion) indication, or a physical random access channel mask index (physical random access channel (PRACH) mask index). When the first information indicates random access to a non-serving cell, the cell identifier in the first information is an identifier of the non-serving cell. For example, when the cell identifier is the identifier of the first cell, the first information indicates the terminal device to send the random access preamble of the first cell. In other words, the terminal device initiates a random access process to the first cell. Optionally, the first information may alternatively indicate random access to a serving cell. When the first information indicates random access to the serving cell, the cell identifier in the first information may be an identifier of the serving cell. For example, the cell identifier may alternatively be the identifier of the serving cell, and in this case, the first information indicates the terminal device to send a random access preamble of the serving cell, in other words, initiate a random access process to the serving cell.

Optionally, the identifier of the first cell may be a physical cell identifier (physical cell ID, PCI) or another identifier of the first cell, for example, may be a local identifier of at least one non-serving cell configured by the network device for the terminal device.

In an implementation, the first information includes a first field, and the first field is used to select one non-serving cell from a plurality of configured non-serving cells, or the first field is used to select one cell from a plurality of configured non-serving cells and a cell through which the first information is sent. For example, x non-serving cells are currently configured, and the first field is used to select one non-serving cell from the x non-serving cells, or the first field is used to select one cell from the x non-serving cells and the cell through which the first information is sent (a total of x+1 cells). When a cell indicated by the first field is a non-serving cell, the non-serving cell is the first cell. A length of the first field is determined based on the quantity x of the configured non-serving cells. For example, the length of the first field is equal to $\lceil log_2(x) \rceil$ or $\lceil log_2(x+1) \rceil$.

In another implementation, the first information includes a second field, and the second field is used to select one cell from a cell through which the first information is sent and one currently active non-serving cell, that is, select either of the two cells. For example, a value of the second field being 0 indicates selecting the cell through which the first information is sent. A value of the second field being 1 indicates selecting the active non-serving cell. Alternatively, a value of the second field being 1 indicates selecting the cell through which the first information is sent. A value of the second field being 0 indicates selecting the active non-serving cell. When a cell indicated by the second field is the currently active non-serving cell, the non-serving cell is the first cell. A length of the second field is equal to one bit.

In the foregoing method, one cell indication field (the first field or the second field) in the first information indicates a cell for random access. Optionally, the cell indication field is present only when a specific condition is met. The specific condition may include one or a combination of the following:

The network device configures a non-serving cell for the terminal device;
the network device configures two control resource set (control resource set, CORESET) groups for the terminal device, in other words, CORESETs configured by the network device for the terminal device correspond to two CORESET pool indexes CORESETPoolIndex in total (to be specific, some CORESETs correspond to CORESETPoolIndex 0, and some CORESETs correspond to CORESETPoolIndex 1);
the network device configures, by using a dedicated RRC parameter, presence of the cell indication; and

the network device configures that the terminal device uses lower layer signaling-based cell handover, where the lower layer signaling-based cell handover means that cell handover is indicated by using physical layer signaling such as DCI signaling or MAC layer signaling such as a MAC CE.

Optionally, the foregoing conditions may be further subdivided. Specifically, when a first condition is met, the first field is present. The first condition may include one or a combination of the following:

The network device configures a non-serving cell for the terminal device;
the network device configures that the terminal device uses lower layer signaling-based cell handover, where the lower layer signaling-based cell handover means that cell handover is performed by using physical layer signaling such as DCI signaling or MAC layer signaling such as a MAC CE; and
the network device configures, by using a dedicated RRC parameter, presence of the cell indication.

When a second condition is met, the second field is present. The second condition may include one or a combination of the following:

The network device configures a non-serving cell for the terminal device;
the network device configures two CORESET groups for the terminal device, in other words, the CORESETs configured by the network device for the terminal device correspond to two CORESETPoolIndex parameter values in total (to be specific, some CORESETs correspond to a CORESETPoolIndex parameter value 0, and some CORESETs correspond to a CORESETPoolIndex parameter value 1); and
the network device configures, by using a dedicated RRC parameter, presence of the cell indication.

The first field and the second field may alternatively be represented as a same field, which is referred to as a third field for short. The third field corresponds to different field lengths and has different meanings in different conditions. For example, when the first condition is met, a meaning and a field length of the third field are equivalent to a meaning and a field length of the first field in the foregoing descriptions. When the second condition is met, a meaning and a field length of the third field are equivalent to a meaning and a field length of the second field in the foregoing descriptions.

The "combination" in the foregoing descriptions may indicate logical AND, logical OR, or logical AND and logical OR. This is not limited in this application.

In an optional implementation, the first information may be downlink control information (downlink control information, DCI), or the network device sends the first information to the terminal device by using the DCI. Alternatively, the first information may be RRC, a MAC CE, or the like.

It should be noted that, in this application, the first cell is merely used as an example for description, and this is also applicable to another non-serving cell. Optionally, in addition to the foregoing information about the first cell, the first information may further include corresponding information about the another non-serving cell. Alternatively, the first cell in this application may be limited to a non-serving cell that is currently activated or currently used for transmission in the at least one non-serving cell configured by the network device for the terminal device. The non-serving cell that is currently activated or currently used for transmission may specifically be a non-serving cell corresponding to a currently active transmission configuration indicator state (transmission configuration indicator state, TCI-state). For example, the network device may activate at least one TCI-state for the terminal device. The TCI-state may be used for transmission. A specific to-be-used TCI-state may be further indicated by using the DCI. Each TCI-state corresponds to one serving cell or non-serving cell. It may be specified that the TCI-state corresponds to at most one non-serving cell, and the non-serving cell is the non-serving cell that is currently activated or currently used for transmission.

Step 502: The terminal device sends the random access preamble corresponding to the first cell to the network device based on the first information.

In an optional implementation, the terminal device may determine the first cell based on the identifier of the first cell in the first information. After determining the first cell, the terminal device determines, based on the identifier of the random access preamble in the first information, the to-be-sent random access preamble of the first cell from at least one random access preamble corresponding to the first cell. The terminal device determines, based on the SSB identifier in the first information, one SSB from at least one SSB corresponding to the first cell, and sends the random access preamble based on the SSB. The terminal device determines at least one random access channel occasion in the first cell based on the SSB and an association relationship between the SSB and a random access channel occasion of the first cell, then selects one random access channel occasion from the at least one random access channel occasion by using the physical random access channel mask index in the first information, and sends the random access preamble based on the selected random access channel occasion. The physical random access channel mask index indicates one random access channel occasion in the at least one random access channel occasion.

In an optional implementation, before the network device sends the first information to the terminal device, the terminal device receives configuration information of the first cell from the network device. The configuration information may include at least one or more of the following: the identifier of the first cell, SSB information corresponding to the first cell, and random access information of the first cell. The SSB information corresponding to the first cell may include one or more of the following: an SSB set, an SSB time-domain location, an SSB periodicity, SSB transmit power, or the like. The random access information of the first cell may include one or more of the following: random access preamble information (for example, a random access preamble sequence), random access channel occasion information, the association relationship between the SSB and the random access channel occasion, or the like. The SSB set includes at least one SSB, and the random access preamble information includes at least one random access preamble.

Optionally, the network device may send configuration information of one or more non-serving cells to the terminal device, where the one or more non-serving cells include the first cell.

The network device may send the configuration information of the one or more non-serving cells to the terminal device by using radio resource control (radio resource control, RRC) information.

In an optional implementation, when sending the random access preamble corresponding to the first cell to the network device based on the first information, the terminal device may send the random access preamble corresponding to the first cell to the network device based on the first information and the configuration information.

For example, the terminal device may determine a first SSB and the random access preamble based on the first information and the configuration information; the terminal device may determine a first random access channel occasion based on the first information, the configuration information, and the first SSB; and further, the terminal device may send the random access preamble corresponding to the first cell to the network device based on the first SSB and the first random access channel occasion. For example, the terminal device may send, by using a terminal device beam corresponding to the first SSB, the random access preamble corresponding to the first cell to the network device on a time-frequency resource corresponding to the first random access channel occasion.

In a possible manner, after determining the first cell based on the identifier of the first cell in the first information, the terminal device determines, based on the identifier of the random access preamble in the first information, the to-be-sent random access preamble from the at least one random access preamble corresponding to the first cell included in the random access preamble information in the configuration information.

In a possible manner, the terminal device may determine the first SSB based on the identifier of the first cell and the SSB identifier corresponding to the first cell that are included in the first information, and the SSB set of the first cell included in the configuration information.

For example, the terminal device determines, based on the identifier of the first cell included in the first information and the SSB set included in the configuration information, the SSB set corresponding to the first cell, and then determines, based on the SSB identifier corresponding to the first cell in the first information, the first SSB from the SSB set corresponding to the first cell.

In a possible manner, the terminal device may determine the first random access channel occasion based on the first SSB, the association relationship between the SSB and the random access channel occasion of the first cell included in the configuration information, and the physical random access channel mask index or the random access channel occasion indication included in the first information. For example, the terminal device may determine a group of random access channel occasions (in other words, determine the at least one random access channel occasion of the first cell) based on the first SSB and the association relationship between the SSB and the random access channel occasion of the first cell, and then determine the first random access channel occasion from the group of random access channel occasions based on the physical random access channel mask index or the random access channel occasion indication.

Step 503: The network device determines a first TA of the first cell based on the random access preamble.

In an optional implementation, the network device performs channel estimation based on the random access preamble, identifies a downlink slot start location of the terminal device, and determines the first TA with reference to an uplink slot start location of the network device.

Step 504: The network device sends a random access response message to the terminal device, where the random access response message includes the first TA.

The random access response message may include an identifier of a random access preamble, where the identifier indicates a specific random access preamble corresponding to the random access response message. The random access response message may include one TA value, and the terminal device may determine, by using any one of the following methods, that the TA value is the first TA.

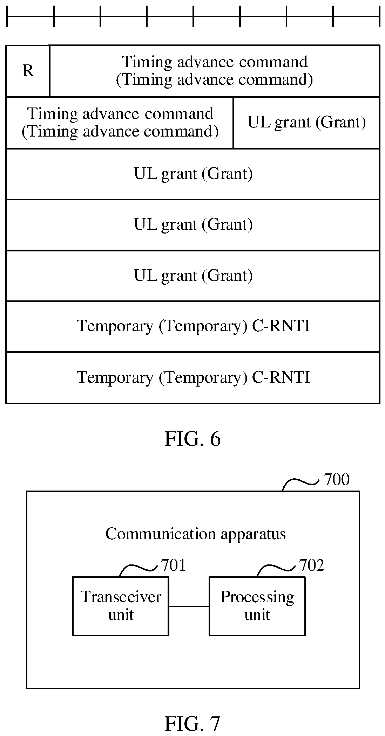

Method 1: A field in the random access response message may indicate whether a TA included in the random access response message is a TA of the first cell. If the field indicates that the TA included in the random access response message is the TA of the first cell, the terminal device determines that the TA is the first TA. In other words, a field is present in the random access response message, indicating whether the TA included in the random access response message is the TA of the first cell. For example, the foregoing field may be a field including a first bit of the random access response message. Alternatively, the foregoing field may include some or all bits of an existing field in the random access response message. A format of the random access response message may be shown in FIG. 6. For example, some or all bits of a temporary (temporary) cell radio network temporary identifier (cell radio network temporary identifier, C-RNTI) field in the random access response message may be used as the foregoing field. To be specific, some or all bits of the temporary C-RNTI field in the random access response message indicate whether the TA included in the random access response message is the TA of the first cell. Optionally, some or all bits of the field that is currently present in the random access response message may be used as the foregoing field only when a first condition is met. The first condition may include at least the following condition: The random access preamble corresponding to the random access response message is a contention-free random access preamble.

Method 2: A field in the random access response message may indicate information about a TAG corresponding to a TA included in the random access response message, where the information about the TAG is, for example, a TAG identity. An example in which the information about the TAG is the TAG identity is used for description. If the TAG identity is a first TAG identity corresponding to the first cell, the terminal device determines that the TA included in the random access response message is a TA corresponding to the first cell, namely, the first TA. In other words, a field is present in the random access response message, indicating the TAG identity corresponding to the TA included in the random access response message. If the TAG identity is the first TAG identity, it indicates that the TA included in the random access response message is the TA of the first cell. The first TAG identity may be a TAG identity configured by the network device for the first cell, or a protocol-specified TAG identity specially reserved for the first cell. The network device may configure, for the terminal device, a TAG identity corresponding to each non-serving cell. When there are a plurality of non-serving cells, TAG identities corresponding to these non-serving cells may be limited to be the same, to prevent the non-serving cells from occupying excessive TAG identities. For example, the foregoing field may be a field including a first bit of the random access response message. Alternatively, the foregoing field may include some or all bits of an existing field in the random access response message. A format of the random access response message may be shown in FIG. 6. For example, some or all bits of a temporary C-RNTI field in the random access message may be used as the foregoing field. To be specific, some or all bits of the temporary C-RNTI field in the random access response message indicate the information about the TAG corresponding to the TA included in the random access response message. Optionally, some or all bits of the field that is currently present in the random access response message may be used as the foregoing field only when a first condition is met. For the first condition, refer to the descriptions of the first condition in Method 1. Details are not described herein again.

Method 3: The terminal device determines, based on the cell identifier in the first information, a cell corresponding to the random access response message. If the cell is the first cell, a TA in the random access response message is a TA of the first cell, namely, the first TA. Specifically, the terminal device may determine, by using the following method, an identifier of the cell corresponding to the random access response message: The terminal device first determines, based on the identifier of the random access preamble in the random access response message, the random access preamble corresponding to the random access response message. Then, the terminal device determines, based on the random access preamble, the first information indicating the random access preamble, and finally determines the cell identifier in the first information. In other words, the first information includes the identifier of the first cell, and the terminal device may learn, by using the identifier, that the random access process that the first information indicates the terminal device to perform is for the first cell. Therefore, after receiving the random access response message, the terminal device may determine that the TA included in the random access response message is the TA of the first cell, namely, the first TA.

Method 4: The terminal device determines, based on a cell associated with an SSB corresponding to the random access response message, a cell corresponding to the random access response message. If the cell is the first cell, a TA in the random access response message is a TA of the first cell, namely, the first TA. For example, the terminal device may determine, based on the identifier of the random access preamble in the random access response message, the random access preamble corresponding to the random access response message and an SSB corresponding to the random access preamble. There is an association relationship between the SSB and the cell identifier. By using the association relationship, the terminal device may determine a corresponding cell identifier via the SSB. In other words, there is an association relationship between the SSB and a cell. When the SSB indicated by the first information is associated with the first cell, even if the first information does not indicate the cell identifier, the terminal device may learn that the random access process that the first information indicates the terminal device to perform is for the first cell. Therefore, after receiving the random access response message, the terminal device may determine that the TA included in the random access response message is the TA of the first cell, namely, the first TA.

The random access response message may be a random access response (random access response, RAR) in a protocol, or may be a MAC CE. If the random access response message is a MAC CE, the network device needs to send one MAC CE to the terminal device after receiving the random access preamble. The terminal device receives the MAC CE, to obtain TA information in the MAC CE.

The first TA is an initial TA corresponding to the first cell. As the terminal device moves, the TA corresponding to the first cell may be continuously updated.

After receiving an uplink signal (for example, a sounding reference signal (sounding reference signal, SRS)) sent by the terminal device in the non-serving cell, the network device may determine a TA change amount of the non-serving cell of the terminal device. For example, after receiving an uplink signal sent by the terminal device in the first cell, the network device may determine a TA change amount of the first cell. The network device needs to indicate the TA change amount to the terminal device, so that the terminal device adjusts the first TA based on the TA change amount. Therefore, the TA of the first cell is more accurate.

For example, the network device may send second information to the terminal device, and correspondingly, the terminal device may receive the second information from the network device, where the second information indicates the TA change amount of the first cell. After determining that the second information indicates the TA change amount of the first cell, the terminal device may determine the TA change amount of the first cell based on the second information, and further update the TA of the first cell based on the TA change amount.

Optionally, the second information may be a MAC CE, or the network device may send the second information by using the MAC CE. Alternatively, the second information may be other information, for example, RRC information or DCI information. This is not limited in this application.

For example, that the second information indicates the TA change amount of the first cell may be implemented in the following manners.

Manner a1: If a TAG identity in the second information is the first TAG identity, a TA change amount indicated by the second information is the TA change amount of the first cell. That is, the second information indicates the TA change amount of the first cell.

In Manner a1, the terminal device may determine, based on the first TAG identity indicated by the second information, that the second information indicates the TA change amount of the first cell.

In an example, the first TAG identity is a TAG identity of the non-serving cell defined in a protocol. It may also be understood as that the first TAG identity is a TAG identity specially reserved for the non-serving cell.

Optionally, the first TAG identity may be the protocol-specified TAG identity specially reserved for the first cell.

In an existing protocol, there are at most four TAGs, and corresponding TAG IDs are 0, 1, 2, and 3 respectively. In other words, serving cells configured by the network device for the terminal device belong to at most four different TAGs. To indicate a TA change amount to the non-serving cell, one of the TAG IDs (for example, may be any one of the TAG IDs 0, 1, 2, and 3) may be reserved for the non-serving cell, and the serving cells can only use the remaining TAG IDs. For example, TAG ID=3 is reserved for the non-serving cell, and the serving cells can only use the TAG IDs 0, 1, and 2, but cannot use the TAG ID 3. In this case, when the terminal device receives a MAC CE indicating a TA change amount, if TAG ID in the MAC CE is equal to 3, the terminal device determines that the TA change amount indicated by the MAC CE is used for the non-serving cell. The network device may configure a plurality of non-serving cells for the terminal device, where only one non-serving cell may be used for data transmission, and the non-serving cell is referred to as an active (active) non-serving cell. In this case, the TA change amount indicated by the MAC CE is used to update a TA of the active non-serving cell.

For example, whether to reserve a TAG ID for the non-serving cell depends on an RRC configuration, for example, depends on whether the non-serving cell is configured. If the non-serving cell is configured, a specific TAG ID is used for the non-serving cell. After receiving a MAC CE carrying the TAG ID, the terminal device updates the TA of the non-serving cell by using a TA change amount in the MAC CE. If no non-serving cell is configured, the TAG ID is used for a serving cell associated with the TAG ID. After receiving a MAC CE carrying the TAG ID, the terminal device updates, by using a TA change amount in the MAC CE, a TA of the serving cell associated with the TAG ID.

In another example, the first TAG identity is a TAG identity configured by the network device for the non-serving cell.

For example, the first TAG identity may be the TAG identity configured by the network device for the first cell.

Optionally, when there are a plurality of non-serving cells, the network device may configure a corresponding TAG identity for each non-serving cell of the terminal device. The TAG identities configured by the network device for the plurality of non-serving cells may be limited to be the same, to avoid occupying excessive TAG identities.

For example, the configuration information of the non-serving cell may include a TAG ID, where the TAG ID indicates a specific TAG to which the non-serving cell belongs. When the plurality of non-serving cells are configured, the TAG IDs of the plurality of non-serving cells can be set to a same value. The TAG IDs may be configured in only one non-serving cell, and the remaining non-serving cells use the same TAG ID by default. Alternatively, the TAG IDs are configured in different non-serving cells, but the TAG IDs configured in all non-serving cells are the same. When the terminal device receives a MAC CE indicating a TA change amount, if a TAG ID in the MAC CE is equal to the TAG ID configured for the non-serving cell, it indicates that the TA change amount indicated by the MAC CE is used to update a TA of the non-serving cell.

Optionally, the TAG ID configured by the network device for the non-serving cell may be any one in an existing protocol, or may be a TAG ID different from a TAG ID in an existing protocol. This is not limited in this application.

Manner a2: If a logical channel identifier (logical channel ID, LCID) corresponding to the second information is a first LCID, a TA change amount indicated by the second information is the TA change amount of the first cell.

In Manner a2, if the LCID corresponding to the second information is the first LCID, the terminal device may determine that the second information indicates the TA change amount of the first cell.

For example, a specific LCID (for example, the first LCID) is used to mark a MAC CE indicating the TA change amount of the non-serving cell. When the terminal device receives a MAC CE, and an LCID corresponding to the MAC CE is the LCID of the MAC CE indicating the TA change amount of the non-serving cell, the terminal device may determine that a TA change amount in the MAC CE is used for the non-serving cell. In this case, the terminal device may ignore a TAG ID field in the MAC CE. If the LCID corresponding to the MAC CE is not the LCID of the MAC CE indicating the TA change amount of the non-serving cell, the terminal device determines a corresponding TAG based on the TAG ID field in the MAC CE, and uses, for a TA of a serving cell corresponding to the TAG, a TA change amount indicated in the MAC CE.

Manner a3: If a control resource set (control resource set, CORESET) pool index (CORESETPoolIndex) corresponding to the second information is equal to a second value, a TA change amount indicated by the second information is the TA change amount of the first cell.

In Manner a3, when the control resource set pool index corresponding to the second information is the second value, the terminal device may determine that the second information indicates the TA change amount of the first cell.

Optionally, the second value may be 0 or 1, or may be another value. This is not limited in this application.

For example, CORESETs may be grouped into two groups, and one of the groups may be used to schedule data transmission of the non-serving cell. Therefore, if a MAC CE is scheduled by using the CORESET group, or the MAC CE is associated with the CORESET group, the terminal device may determine that the MAC CE indicates the TA change amount of the non-serving cell. For example, the foregoing CORESET group may be a CORESET corresponding to a CORESET pool index CORESTPoolIndex=0 or CORESETPoolIndex=1. If a MAC CE is scheduled via a PDCCH corresponding to CORESETPoolIndex 1, a TA change amount indicated by the MAC CE is used for the non-serving cell. Alternatively, if a MAC CE is associated with CORESETPoolIndex 1, a TA change amount indicated by the MAC CE is used for the non-serving cell.

Alternatively, conversely, if a MAC CE is scheduled via a PDCCH corresponding to CORESETPoolIndex 0, a TA change amount indicated by the MAC CE is used for the non-serving cell. Alternatively, if a MAC CE is associated with CORESETPoolIndex 0, a TA change amount indicated by the MAC CE is used for the non-serving cell.

Manner a4: If a cell identifier included in the second information is the identifier of the first cell, a TA change amount indicated by the second information is the TA change amount of the first cell.

In Manner a4, if the second information includes the identifier of the first cell, the terminal device may determine that the second information indicates the TA change amount of the first cell.

For example, the identifier of the first cell is carried in a MAC CE indicating a TA change amount, to indicate that the TA change amount indicated by the MAC CE is used for a cell corresponding to the identifier of the first cell, that is, the first cell, so that the TA of the non-serving cell is updated.

According to the foregoing method, the terminal device may maintain the TA of the first cell, and the TA is used for uplink transmission in the first cell. When sending an uplink signal, the terminal device needs to determine whether to send the uplink signal in the non-serving cell, and therefore, the terminal device determines whether to transmit the uplink signal by using the TA corresponding to the non-serving cell. To be specific, when sending the uplink signal in the non-serving cell, the terminal device determines that the uplink signal is transmitted by using the TA corresponding to the non-serving cell, and further, the terminal device sends the uplink signal in the non-serving cell based on the TA corresponding to the non-serving cell. When sending the uplink signal in the serving cell, the terminal device determines that the uplink signal is transmitted by using a TA corresponding to the serving cell, and further, the terminal device sends the uplink signal in the serving cell based on the TA corresponding to the serving cell.

In an optional implementation, after obtaining the first TA, the terminal device determines, when the terminal device needs to transmit a first uplink signal, that the first uplink signal is transmitted by using the TA corresponding to the first cell, and the terminal device sends the first uplink signal in the first cell based on the TA corresponding to the first cell. In this case, the terminal device sends the first uplink signal in the first cell based on the first TA.

For example, the terminal device may determine, by using the following two methods, that the first uplink signal is transmitted by using the TA corresponding to the first cell.

Method b1: When a control resource set pool index (CORESTEPoolIndex) corresponding to the first uplink signal is equal to a first value, the terminal device determines that the first uplink signal is transmitted by using the TA corresponding to the first cell.

If one uplink transmission is associated with a specific CORESETPoolIndex (for example, CORESTPoolIndex 0 or CORESETPoolIndex 1), and the specific CORESETPoolIndex is associated with the non-serving cell, the uplink transmission is performed by using the TA of the non-serving cell. For example, CORESETPoolIndex 1 is associated with the non-serving cell. That is, if one uplink transmission is associated with CORESETPoolIndex 1, the uplink transmission is performed by using the TA of the non-serving cell. That the uplink transmission is associated with one CORESETPoolIndex may mean that the uplink transmission, for example, a physical uplink shared channel (physical uplink sharing channel, PUSCH) is scheduled by using downlink control information corresponding to CORESTPoolIndex, may mean that the uplink transmission is a feedback message corresponding to a physical downlink shared channel (Physical downlink sharing channel, PDSCH) scheduled by using the CORESTPoolIndex, may mean that an association relationship is configured between the uplink transmission and CORESETPoolIndex, or the like.

Optionally, the first value may be 1. Certainly, the first value may alternatively be 0 or another value. This is not limited in this application.

Method b2: When a cell identifier included in a transmission configuration indicator state (transmission configuration indicator state, TCI-state) corresponding to the first uplink signal is the identifier of the first cell, the terminal device determines that the first uplink signal is transmitted by using the TA corresponding to the first cell.

A beam used for uplink transmission is indicated by a TCI-state. The TCI-state includes a PCI field, where the PCI field indicates that the uplink transmission is directed to a cell corresponding to a specific PCI. The terminal device performs the uplink transmission by using a TA of the cell corresponding to the PCI. If the PCI is a PCI of the non-serving cell, the uplink transmission is performed by using the TA of the non-serving cell corresponding to the PCI. For example, when the PCI in the TCI-state is a PCI of the first cell, the terminal device determines that the first uplink signal is transmitted by using the TA corresponding to the first cell.

Method b3: When an SRS or an SRS resource set corresponding to the first uplink signal is associated with the first cell, the terminal device determines that the first uplink signal is transmitted by using the TA corresponding to the first cell.

An association relationship may be established between the SRS or the SRS resource set and the first cell. When an SRS corresponding to the first uplink signal (for example, a PUSCH) is associated with the first cell, or an SRS set in which a corresponding SRS is located is associated with the first cell, the TA corresponding to the first cell is used for the first uplink signal.

In an optional implementation, after updating the TA of the first cell based on the TA change amount of the first cell and obtaining an updated TA of the first cell, the terminal device determines, when the terminal device needs to transmit a second uplink signal, that the second uplink signal is transmitted by using the TA corresponding to the first cell, and the terminal device sends the second uplink signal in the first cell based on the TA corresponding to the first cell. In this case, the terminal device sends the second uplink signal in the first cell based on the updated TA of the first cell.

A method for determining, by the terminal device, that the second uplink signal is transmitted by using the TA corresponding to the first cell is similar to a method for determining, by the terminal device, that the first uplink signal is transmitted by using the TA corresponding to the first cell. Mutual reference may be made to each other, and details are not described herein again.

Optionally, in addition to the foregoing steps, the terminal device may further report terminal device capability information to the network device. The terminal device capability information indicates a TA obtaining or TA maintenance capability of the terminal device. The terminal device capability information includes at least one or more of the following: a quantity of non-serving cells whose TAs can be maintained, in other words, the quantity of non-serving cells for which the TAs can be maintained; a quantity of TAs that are of non-serving cells and that can be maintained, that is, the quantity of TAs that can be maintained, where the TA is the TA of the non-serving cell; and a total quantity of TAs that can be maintained, to be specific, a sum of a quantity of TAs of serving cells and a quantity of TAs of non-serving cells.

According to the foregoing method, the terminal device can obtain the TA of the non-serving cell, to accurately perform uplink transmission in the non-serving cell.

Based on the foregoing embodiments, an embodiment of this application further provides a communication apparatus. Refer to FIG. 7. A communication apparatus 700 may include a transceiver unit 701 and a processing unit 702. The transceiver unit 701 is configured to receive a message (information or data) or send a message (information or data) by the communication apparatus 700, and the processing unit 702 is configured to control and manage an action of the communication apparatus 700. The processing unit 702 may further control steps performed by the transceiver unit 701.

For example, the communication apparatus 700 may be specifically the terminal device in the foregoing embodiments, a processor, a chip, or a chip system in the terminal device, a functional module, or the like. Alternatively, the communication apparatus 700 may be specifically the network device in the foregoing embodiments, a processor, a chip, or a chip system in the network device, a functional module, or the like.

In an embodiment, when the communication apparatus 700 is configured to implement functions of the terminal device in the embodiment shown in FIG. 5, the transceiver unit 701 may be configured to receive first information from the network device, where the first information indicates the terminal device to perform random access to a first cell, and the first cell is a non-serving cell of the terminal device; the processing unit 702 may be configured to send a random access preamble corresponding to the first cell to the network device based on the first information; and the transceiver unit 701 may be further configured to receive a random access response message from the network device, where the random access response message includes a first TA, and the first TA corresponds to the first cell.

For example, the first information may include one or more of the following: an identifier of the first cell, a synchronization signal/physical broadcast channel block SSB identifier corresponding to the first cell, an identifier of the random access preamble, a random access channel occasion indication, or a physical random access channel mask index.

In an optional implementation, the transceiver unit 701 may be further configured to: before receiving the first information from the network device, receive configuration information of the first cell from the network device, where the configuration information may include one or more of the following: the identifier of the first cell, synchronization signal/physical broadcast channel block SSB information corresponding to the first cell, and random access information of the first cell. The SSB information corresponding to the first cell may include one or more of the following: an SSB set, an SSB periodicity, or SSB transmit power. The random access information of the first cell may include one or more of the following: random access preamble information, random access channel occasion information, or an association relationship between an SSB and a random access channel occasion.

Optionally, when sending the random access preamble corresponding to the first cell to the network device based on the first information, the processing unit 702 may be configured to send the random access preamble corresponding to the first cell to the network device based on the first information and the configuration information.

For example, when sending the random access preamble corresponding to the first cell to the network device based on the first information and the configuration information, the processing unit 702 may be configured to: determine a first SSB based on the first information and the configuration information; determine a first random access channel occasion based on the first information, the configuration information, and the first SSB; and send the random access preamble corresponding to the first cell to the network device based on the first SSB and the first random access channel occasion.

For example, when determining the first SSB based on the first information and the configuration information, the processing unit 702 may be configured to: determine the first SSB based on the identifier of the first cell and the SSB identifier corresponding to the first cell that are included in the first information, and the SSB set of the first cell included in the configuration information.

Optionally, when determining the first random access channel occasion based on the first information, the configuration information, and the first SSB, the processing unit 702 may be configured to: determine the first random access channel occasion based on the first SSB, the association relationship between the SSB and the random access channel occasion of the first cell included in the configuration information, and the physical random access channel mask index included in the first information.

In an optional implementation, the processing unit 702 may be further configured to determine that a first uplink signal is transmitted by using a TA corresponding to the first cell; and the transceiver unit 701 may be further configured to send the first uplink signal in the first cell based on the first TA.

In a possible manner, when determining that the first uplink signal is transmitted by using the TA corresponding to the first cell, the processing unit 702 may be configured to: when a control resource set pool index corresponding to the first uplink signal is equal to a first value, determine that the first uplink signal is transmitted by using the TA corresponding to the first cell; or when a cell identifier included in a transmission configuration indicator state TCI-state corresponding to the first uplink signal is the identifier of the first cell, determine that the first uplink signal is transmitted by using the TA corresponding to the first cell.

In an example, the transceiver unit 701 may be further configured to receive second information from the network device, where the second information indicates a TA change amount of the first cell.

Optionally, that the second information indicates a TA change amount of the first cell may include: If a timing advance group TAG identity in the second information is a first TAG identity, a TA change amount indicated by the second information is the TA change amount of the first cell; if a logical channel identifier LCID corresponding to the second information is a first LCID, a TA change amount indicated by the second information is the TA change amount of the first cell; if a control resource set pool index corresponding to the second information is equal to a second value, a TA change amount indicated by the second information is the TA change amount of the first cell; or if a cell identifier in the second information is the identifier of the first cell, a TA change amount indicated by the second information is the TA change amount of the first cell.

For example, the first TAG identity may be a TAG identity of a non-serving cell defined in a protocol; or the first TAG identity may be a TAG identity configured by the network device for a non-serving cell.

In another embodiment, when the communication apparatus 700 is configured to implement functions of the network device in the embodiment shown in FIG. 5, the transceiver unit 701 may be configured to: send first information to the terminal device, where the first information indicates the terminal device to perform random access to a first cell, and the first cell is a non-serving cell of the terminal device; and receive, from the terminal device, a random access preamble corresponding to the first cell; the processing unit 702 may be configured to determine a first TA of the first cell based on the random access preamble; and the transceiver unit 701 may be further configured to send a random access response message to the terminal device, where the random access response message includes the first TA.

For example, the first information may include one or more of the following: an identifier of the first cell, a synchronization signal/physical broadcast channel block SSB identifier corresponding to the first cell, an identifier of the random access preamble, a random access channel occasion indication, or a physical random access channel mask index.

In an optional implementation, the transceiver unit 701 may be further configured to: before sending the first information to the terminal device, send configuration information of the first cell to the terminal device, where the configuration information may include one or more of the following: the identifier of the first cell, synchronization signal/physical broadcast channel block SSB information corresponding to the first cell, and random access information of the first cell. The SSB information corresponding to the first cell may include one or more of the following: an SSB set, an SSB periodicity, or SSB transmit power. The random access information of the first cell may include one or more of the following: random access preamble information, random access channel occasion information, or an association relationship between an SSB and a random access channel occasion.

In a possible manner, the transceiver unit 701 may be further configured to receive a first uplink signal in the first cell based on the first TA, where the first uplink signal is transmitted by using a TA corresponding to the first cell.

For example, when a control resource set pool index corresponding to the first uplink signal is equal to a first value, the first uplink signal is transmitted by using the TA corresponding to the first cell; or when a cell identifier included in a transmission configuration indicator state TCI-state corresponding to the first uplink signal is the identifier of the first cell, the first uplink signal is transmitted by using the TA corresponding to the first cell.

In an example, the processing unit 702 may be further configured to determine a TA change amount of the first cell; and the transceiver unit 701 may be further configured to send second information to the terminal device, where the second information indicates the TA change amount of the first cell.

Optionally, that the second information indicates the TA change amount of the first cell may include: If a timing advance group TAG identity in the second information is a first TAG identity, a TA change amount indicated by the second information is the TA change amount of the first cell; if a logical channel identifier L CID corresponding to the second information is a first LCID, a TA change amount indicated by the second information is the TA change amount of the first cell; if a control resource set pool index corresponding to the second information is equal to a second value, a TA change amount indicated by the second information is the TA change amount of the first cell; or if a cell identifier in the second information is the identifier of the first cell, a TA change amount indicated by the second information is the TA change amount of the first cell.

For example, the first TAG identity is a TAG identity of a non-serving cell defined in a protocol; or the first TAG identity is a TAG identity configured by the network device for a non-serving cell.

It should be noted that, in embodiments of this application, division into the units is an example, and is merely logical function division. In actual implementation, another division manner may be used. In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

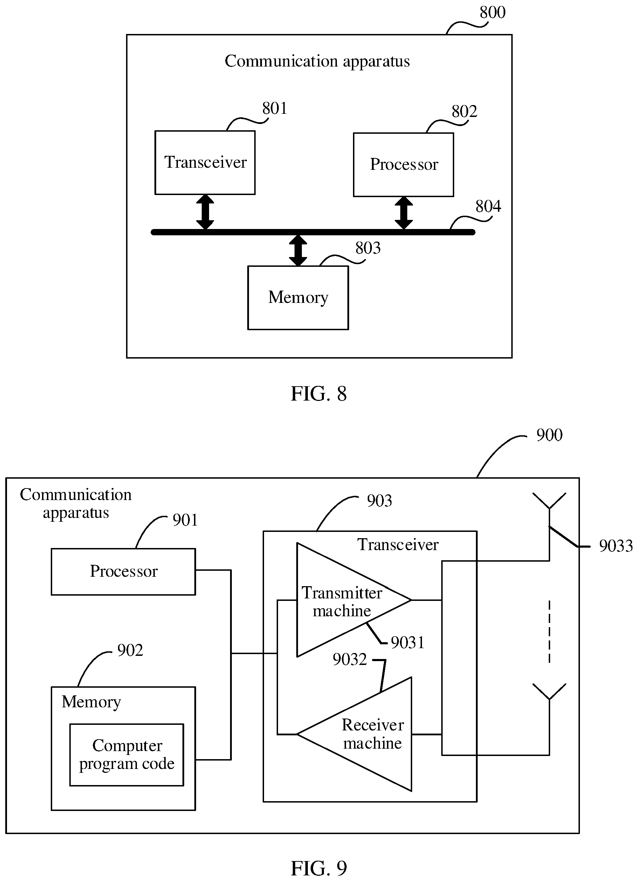

Based on the foregoing embodiments, an embodiment of this application further provides a communication apparatus. Refer to FIG. 8. A communication apparatus 800 may include a transceiver 801 and a processor 802. Optionally, the communication apparatus 800 may further include a memory 803. The memory 803 may be disposed inside the communication apparatus 800, or may be disposed outside the communication apparatus 800. The processor 802 may control the transceiver 801 to receive and send a message, information, data, or the like. The transceiver may be a transceiver or the like.

Specifically, the processor 802 may be a central processing unit (central processing unit, CPU), a network processor (network processor, NP), or a combination of a CPU and an NP. The processor 802 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 801, the processor 802, and the memory 803 are connected to each other. Optionally, the transceiver 801, the processor 802, and the memory 803 are connected to each other through a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used in FIG. 8 for representation, but it does not indicate that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes the application program stored in the memory 803 to implement the foregoing functions, to implement the functions of the communication apparatus 800.

For example, the communication apparatus 800 may be the terminal device in the foregoing embodiments, the processor, the chip, or the chip system in the terminal device, or the like. Alternatively, the communication apparatus 800 may be the network device in the foregoing embodiments, the processor, the chip, or the chip system in the network device, or the like.

In an embodiment, when the communication apparatus 800 implements the functions of the terminal device in the embodiment shown in FIG. 5, the transceiver 801 may implement receiving and sending operations performed by the terminal device in the foregoing embodiments; and the processor 802 may implement operations other than the receiving and sending operations performed by the terminal device in the foregoing embodiments. For specific related descriptions, refer to the related descriptions in the embodiment shown in FIG. 5. Details are not described herein again.

In an embodiment, when the communication apparatus 800 implements the functions of the network device in the embodiment shown in FIG. 5, the transceiver 801 may implement receiving and sending operations performed by the network device in the foregoing embodiments; and the processor 802 may implement operations other than the receiving and sending operations performed by the network device in the foregoing embodiments. For specific related descriptions, refer to the related descriptions in the embodiment shown in FIG. 5. Details are not described herein again.

This application further provides a communication apparatus 900. The communication apparatus 900 may be a terminal device, a processor or a chip in the terminal device, or the like. Alternatively, the communication apparatus 900 may be a network device, a processor or a chip in the network device, or the like. In an example, when the communication apparatus 900 is the terminal device or the network device, FIG. 9 is a simplified diagram of a structure of the terminal device or the network device. As shown in FIG. 9, the communication apparatus 900 may include a processor 901, a memory 902, and a transceiver 903. The memory 902 may store computer program code. The transceiver 903 includes a transmitter machine 9031, a receiver machine 9032, a radio frequency circuit (not shown in FIG. 9), an antenna 9033, and an input/output apparatus (not shown in FIG. 9).

The processor 901 may be configured to: process a communication protocol and communication data, control the communication apparatus 900, execute a software program, process data of the software program, and the like. The memory 902 is mainly configured to store the software program and the data. The radio frequency circuit is mainly configured to: perform conversion between a baseband signal and a radio frequency signal, and process the radio frequency signal. The antenna 9033 is mainly configured to receive and send a radio frequency signal in a form of an electromagnetic wave. The input/output apparatus, such as a touchscreen, a display, or a keyboard, is mainly configured to receive data input by a user and output data to the user. It should be noted that some types of communication apparatuses 900 may have no input/output apparatus.

When needing to send data, after performing baseband processing on the to-be-sent data, the processor 901 outputs a baseband signal to the radio frequency circuit, and the radio frequency circuit sends a radio frequency signal to the outside in the form of an electromagnetic wave through the antenna 9033 after performing radio frequency processing on the baseband signal. When data is sent to the communication apparatus 900, the radio frequency circuit receives a radio frequency signal through the antenna 9033, converts the radio frequency signal into a baseband signal, and outputs the baseband signal to the processor 901. The processor 901 converts the baseband signal into data, and processes the data. For ease of description, FIG. 9 shows only one memory 902, one processor 901, and one transceiver 903. In an actual product of the communication apparatus 900, there may be one or more processors 901 and one or more memories 902. The memory 902 may also be referred to as a storage medium, a storage device, or the like. The memory 902 may be disposed independent of the processor 901, or may be integrated with the processor 901. This is not limited in this embodiment of this application.

In this application, the antenna and the radio frequency circuit that have receiving and sending functions may be considered as a transceiver module of the communication apparatus 900, and the processor having a processing function may be considered as a processing module of the communication apparatus 900.

For example, the processor 901 may also be referred to as a processing unit, a processing board, a processing module, a processing apparatus, or the like, and the transceiver 903 may also be referred to as a transceiver unit, a transceiver machine, a transceiver apparatus, or the like.

Optionally, a component that is in the transceiver 903 and that is configured to implement a receiving function may be considered as a receiving unit, and a component that is in the transceiver 903 and that is configured to implement a sending function may be considered as a sending unit. That is, the transceiver 903 includes a receiver and a transmitter. The transceiver 903 sometimes may also be referred to as a transceiver machine, a transceiver unit, a transceiver circuit, or the like. The receiver sometimes may also be referred to as a receiver machine, a receiving unit, a receiving circuit, or the like. The transmitter sometimes may also be referred to as a transmitter machine, a transmitting unit, a transmitter circuit, or the like.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the functions and the like of the terminal device or the network device in the embodiment shown in FIG. 5.

An embodiment of this application further provides a computer program product. The computer program product is configured to store a computer program. When the computer program is executed by a computer, the computer may implement the functions and the like of the terminal device or the network device in the embodiment shown in FIG. 5.

An embodiment of this application further provides a chip, including a processor. The processor is coupled to a memory, and is configured to invoke a program in the memory, so that the chip implements the functions and the like of the terminal device or the network device in the embodiment shown in FIG. 5.

An embodiment of this application further provides a chip. The chip is coupled to a memory, and the chip is configured to implement the functions and the like of the terminal device or the network device in the embodiment shown in FIG. 5.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on a computer or another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and equivalent technologies thereof.

## Claims

1. A timing advance TA obtaining method, comprising:

   receiving, by a terminal device, first information from a network device, wherein the first information indicates the terminal device to perform random access to a first cell, and the first cell is a non-serving cell of the terminal device;
   sending, by the terminal device, a random access preamble corresponding to the first cell to the network device based on the first information; and
   receiving, by the terminal device, a random access response message from the network device, wherein the random access response message comprises a first TA, and the first TA corresponds to the first cell.

2. The method according to claim 1, wherein the first information comprises one or more of the following: an identifier of the first cell, a synchronization signal/physical broadcast channel block SSB identifier corresponding to the first cell, an identifier of the random access preamble, a random access channel occasion indication, or a physical random access channel mask index.

3. The method according to claim 1 or 2, wherein before the receiving, by a terminal device, first information from a network device, the method further comprises:

   receiving, by the terminal device, configuration information of the first cell from the network device, wherein the configuration information comprises one or more of the following: the identifier of the first cell, synchronization signal/-physical broadcast channel block SSB information corresponding to the first cell, and random access information of the first cell, wherein
   the SSB information corresponding to the first cell comprises one or more of the following: an SSB set, an SSB periodicity, or SSB transmit power; and
   the random access information of the first cell comprises one or more of the following: random access preamble information, random access channel occasion information, or an association relationship between an SSB and a random access channel occasion.

4. The method according to claim 3, wherein the sending, by the terminal device, a random access preamble corresponding to the first cell to the network device based on the first information comprises:
   sending, by the terminal device, the random access preamble corresponding to the first cell to the network device based on the first information and the configuration information.

5. The method according to claim 4, wherein the sending, by the terminal device, the random access preamble corresponding to the first cell to the network device based on the first information and the configuration information comprises:

   determining, by the terminal device, a first SSB based on the first information and the configuration information;
   determining, by the terminal device, a first random access channel occasion based on the first information, the configuration information, and the first SSB; and
   sending, by the terminal device, the random access preamble corresponding to the first cell to the network device based on the first SSB and the first random access channel occasion.

6. The method according to claim 5, wherein the determining, by the terminal device, a first SSB based on the first information and the configuration information comprises:
   determining, by the terminal device, the first SSB based on the identifier of the first cell and the SSB identifier corresponding to the first cell that are comprised in the first information, and the SSB set of the first cell comprised in the configuration information.

7. The method according to claim 5, wherein the determining, by the terminal device, a first random access channel occasion based on the first information, the configuration information, and the first SSB comprises:
   determining, by the terminal device, the first random access channel occasion based on the first SSB, the association relationship between the SSB and the random access channel occasion of the first cell comprised in the configuration information, and the physical random access channel mask index comprised in the first information.

8. The method according to any one of claims 1 to 7, wherein the method further comprises:

   determining, by the terminal device, that a first uplink signal is transmitted by using a TA corresponding to the first cell; and
   sending, by the terminal device, the first uplink signal in the first cell based on the first TA.

9. The method according to claim 8, wherein the determining, by the terminal device, that a first uplink signal is transmitted by using a TA corresponding to the first cell comprises:

when a control resource set pool index corresponding to the first uplink signal is equal to a first value, determining, by the terminal device, that the first uplink signal is transmitted by using the TA corresponding to the first cell; or when a cell identifier comprised in a transmission configuration indicator state TCI-state corresponding to the first uplink signal is the identifier of the first cell, determining, by the terminal device, that the first uplink signal is transmitted by using the TA corresponding to the first cell.

10. The method according to any one of claims 1 to 9, wherein the method further comprises:
receiving, by the terminal device, second information from the network device, wherein the second information indicates a TA change amount of the first cell.

11. The method according to claim 10, wherein that the second information indicates a TA change amount of the first cell comprises:

if a timing advance group TAG identity in the second information is a first TAG identity, a TA change amount indicated by the second information is the TA change amount of the first cell; if a logical channel identifier LCID corresponding to the second information is a first LCID, a TA change amount indicated by the second information is the TA change amount of the first cell; if a control resource set pool index corresponding to the second information is equal to a second value, a TA change amount indicated by the second information is the TA change amount of the first cell; or if a cell identifier in the second information is the identifier of the first cell, a TA change amount indicated by the second information is the TA change amount of the first cell.

12. The method according to claim 11, wherein

the first TAG identity is a TAG identity of a non-serving cell defined in a protocol; or the first TAG identity is a TAG identity configured by the network device for a non-serving cell.

13. The method according to any one of claims 1 to 12, wherein the first information comprises a first field, and the first field is used to select one non-serving cell from a plurality of configured non-serving cells; or the first field is used to select one cell from a plurality of configured non-serving cells and a cell through which the first information is sent.

14. The method according to claim 13, wherein when a cell selected by using the first field is a non-serving cell, the non-serving cell is the first cell.

15. The method according to any one of claims 1 to 12, wherein the first information comprises a second field, and the second field is used to select one cell from a cell through which the first information is sent and one currently active non-serving cell.

16. The method according to claim 15, wherein when a cell selected by using the second field is the currently active non-serving cell, the currently active non-serving cell is the first cell.

17. The method according to any one of claims 13 to 16, wherein the method further comprises:
the first information comprises the first field or the second field when one or a combination of the following conditions is met:

the network device configures a non-serving cell for the terminal device;
the network device configures two control resource set CORESET groups for the terminal device;
the network device configures presence of the first field or the second field; and
the network device configures that the terminal device uses lower layer signaling-based cell handover.

18. A timing advance TA obtaining method, comprising:

sending, by a network device, first information to a terminal device, wherein the first information indicates the terminal device to perform random access to a first cell, and the first cell is a non-serving cell of the terminal device;
receiving, by the network device from the terminal device, a random access preamble corresponding to the first cell;
determining, by the network device, a first TA of the first cell based on the random access preamble; and
sending, by the network device, a random access response message to the terminal device, wherein the random access response message comprises the first TA.

19. The method according to claim 18, wherein the first information comprises one or more of the following: an identifier of the first cell, a synchronization signal/physical broadcast channel block SSB identifier corresponding to the first cell, an identifier of the random access preamble, a random access channel occasion indication, or a physical random access channel mask index.

20. The method according to claim 18 or 19, wherein before the sending, by a network device, first information to a terminal device, the method further comprises:

sending, by the network device, configuration information of the first cell to the terminal device, wherein the configuration information comprises one or more of the following: the identifier of the first cell, synchronization signal/physical broadcast channel block SSB information corresponding to the first cell, and random access information of the first cell, wherein

the SSB information corresponding to the first cell comprises one or more of the following: an SSB set, an SSB periodicity, or SSB transmit power; and

the random access information of the first cell comprises one or more of the following: random access preamble information, random access channel occasion information, or an association relationship between an SSB and a random access channel occasion.

21. The method according to any one of claims 18 to 20, wherein the method further comprises:
receiving, by the network device, a first uplink signal in the first cell based on the first TA, wherein the first uplink signal is transmitted by using a TA corresponding to the first cell.

22. The method according to claim 21, wherein when a control resource set pool index corresponding to the first uplink signal is equal to a first value, the first uplink signal is transmitted by using the TA corresponding to the first cell; or when a cell identifier comprised in a transmission configuration indicator state TCI-state corresponding to the first uplink signal is the identifier of the first cell, the first uplink signal is transmitted by using the TA corresponding to the first cell.

23. The method according to any one of claims 18 to 22, wherein the method further comprises:

determining, by the network device, a TA change amount of the first cell; and
sending, by the network device, second information to the terminal device, wherein the second information indicates the TA change amount of the first cell.

24. The method according to claim 23, wherein that the second information indicates the TA change amount of the first cell comprises:

if a timing advance group TAG identity in the second information is a first TAG identity, a TA change amount indicated by the second information is the TA change amount of the first cell;
if a logical channel identifier LCID corresponding to the second information is a first LCID, a TA change amount indicated by the second information is the TA change amount of the first cell;
if a control resource set pool index corresponding to the second information is equal to a second value, a TA change amount indicated by the second information is the TA change amount of the first cell; or
if a cell identifier in the second information is the identifier of the first cell, a TA change amount indicated by the second information is the TA change amount of the first cell.

25. The method according to claim 24, wherein

the first TAG identity is a TAG identity of a non-serving cell defined in a protocol; or
the first TAG identity is a TAG identity configured by the network device for a non-serving cell.

26. The method according to any one of claims 18 to 25, wherein the first information comprises a first field, and the first field is used to select one non-serving cell from a plurality of configured non-serving cells; or the first field is used to select one cell from a plurality of configured non-serving cells and a cell through which the first information is sent.

27. The method according to claim 26, wherein when a cell selected by using the first field is a non-serving cell, the non-serving cell is the first cell.

28. The method according to any one of claims 18 to 25, wherein the first information comprises a second field, and the second field is used to select one cell from a cell through which the first information is sent and one currently active non-serving cell.

29. The method according to claim 28, wherein when a cell selected by using the second field is the currently active non-serving cell, the currently active non-serving cell is the first cell.

30. The method according to any one of claims 26 to 29, wherein the method further comprises:
the first information comprises the first field or the second field when one or a combination of the following conditions is met:

the network device configures a non-serving cell for the terminal device;
the network device configures two control resource set CORESET groups for the terminal device;
the network device configures presence of the first field or the second field; and
the network device configures that the terminal device uses lower layer signaling-based cell handover.

31. A communication apparatus, comprising:

    a transceiver unit, configured to receive first information from a network device, wherein the first information indicates a terminal device to perform random access to a first cell, and the first cell is a non-serving cell of the terminal device; and
    a processing unit, configured to send a random access preamble corresponding to the first cell to the network device based on the first information, wherein
    the transceiver unit is further configured to receive a random access response message from the network device, wherein the random access response message comprises a first TA, and the first TA corresponds to the first cell.

32. The apparatus according to claim 31, wherein the first information comprises one or more of the following: an identifier of the first cell, a synchronization signal/physical broadcast channel block SSB identifier corresponding to the first cell, an identifier of the random access preamble, a random access channel occasion indication, or a physical random access channel mask index.

33. The apparatus according to claim 31 or 32, wherein the transceiver unit is further configured to:

    before receiving the first information from the network device, receive configuration information of the first cell from the network device, wherein the configuration information comprises one or more of the following: the identifier of the first cell, synchronization signal/physical broadcast channel block SSB information corresponding to the first cell, and random access information of the first cell, wherein
    the SSB information corresponding to the first cell comprises one or more of the following: an SSB set, an SSB periodicity, or SSB transmit power; and
    the random access information of the first cell comprises one or more of the following: random access preamble information, random access channel occasion information, or an association relationship between an SSB and a random access channel occasion.

34. The apparatus according to claim 33, wherein when sending the random access preamble corresponding to the first cell to the network device based on the first information, the processing unit is configured to: send the random access preamble corresponding to the first cell to the network device based on the first information and the configuration information.

35. The apparatus according to claim 34, wherein when sending the random access preamble corresponding to the first cell to the network device based on the first information and the configuration information, the processing unit is configured to:

    determine a first SSB based on the first information and the configuration information;
    determine a first random access channel occasion based on the first information, the configuration information, and the first SSB; and
    send the random access preamble corresponding to the first cell to the network device based on the first SSB and the first random access channel occasion.

36. The apparatus according to claim 35, wherein when determining the first SSB based on the first information and the configuration information, the processing unit is configured to: determine the first SSB based on the identifier of the first cell and the SSB identifier corresponding to the first cell that are comprised in the first information, and the SSB set of the first cell comprised in the configuration information.

37. The apparatus according to claim 35, wherein when determining the first random access channel occasion based on the first information, the configuration information, and the first SSB, the processing unit is configured to: determine the first random access channel occasion based on the first SSB, the association relationship between the SSB and the random access channel occasion of the first cell comprised in the configuration information, and the physical random access channel mask index comprised in the first information.

38. The apparatus according to any one of claims 31 to 37, wherein the processing unit is further configured to:

    determine that a first uplink signal is transmitted by using a TA corresponding to the first cell; and
    send the first uplink signal in the first cell based on the first TA.

39. The apparatus according to claim 38, wherein when determining that the first uplink signal is transmitted by using the TA corresponding to the first cell, the processing unit is configured to:

    when a control resource set pool index corresponding to the first uplink signal is equal to a first value, determine that the first uplink signal is transmitted by using the TA corresponding to the first cell; or

when a cell identifier comprised in a transmission configuration indicator state TCI-state corresponding to the first uplink signal is the identifier of the first cell, determine that the first uplink signal is transmitted by using the TA corresponding to the first cell.

40. The apparatus according to any one of claims 31 to 39, wherein the transceiver unit is further configured to:
receive second information from the network device, wherein the second information indicates a TA change amount of the first cell.

41. The apparatus according to claim 40, wherein that the second information indicates a TA change amount of the first cell comprises:

if a timing advance group TAG identity in the second information is a first TAG identity, a TA change amount indicated by the second information is the TA change amount of the first cell;
if a logical channel identifier LCID corresponding to the second information is a first LCID, a TA change amount indicated by the second information is the TA change amount of the first cell;
if a control resource set pool index corresponding to the second information is equal to a second value, a TA change amount indicated by the second information is the TA change amount of the first cell; or
if a cell identifier in the second information is the identifier of the first cell, a TA change amount indicated by the second information is the TA change amount of the first cell.

42. The apparatus according to claim 41, wherein

the first TAG identity is a TAG identity of a non-serving cell defined in a protocol; or
the first TAG identity is a TAG identity configured by the network device for a non-serving cell.

43. The apparatus according to any one of claims 31 to 42, wherein the first information comprises a first field, and the first field is used to select one non-serving cell from a plurality of configured non-serving cells; or the first field is used to select one cell from a plurality of configured non-serving cells and a cell through which the first information is sent.

44. The apparatus according to claim 43, wherein when a cell selected by using the first field is a non-serving cell, the non-serving cell is the first cell.

45. The apparatus according to any one of claims 31 to 42, wherein the first information comprises a second field, and the second field is used to select one cell from a cell through which the first information is sent and one currently active non-serving cell.

46. The apparatus according to claim 45, wherein when a cell selected by using the second field is the currently active non-serving cell, the currently active non-serving cell is the first cell.

47. The apparatus according to any one of claims 43 to 46, wherein
the first information comprises the first field or the second field when one or a combination of the following conditions is met:

the network device configures a non-serving cell for the terminal device;
the network device configures two control resource set CORESET groups for the terminal device;
the network device configures presence of the first field or the second field; and
the network device configures that the terminal device uses lower layer signaling-based cell handover.

48. A communication apparatus, comprising:

a transceiver unit, configured to: send first information to a terminal device, wherein the first information indicates the terminal device to perform random access to a first cell, and the first cell is a non-serving cell of the terminal device; and
receive, from the terminal device, a random access preamble corresponding to the first cell; and
a processing unit, configured to determine a first TA of the first cell based on the random access preamble, wherein
the transceiver unit is further configured to send a random access response message to the terminal device, wherein the random access response message comprises the first TA.

49. The apparatus according to claim 48, wherein the first information comprises one or more of the following: an identifier of the first cell, a synchronization signal/physical broadcast channel block SSB identifier corresponding to the first cell, an identifier of the random access preamble, a random access channel occasion indication, or a physical random access channel mask index.

50. The apparatus according to claim 48 or 49, wherein the transceiver unit is further configured to:

before sending the first information to the terminal device, send configuration information of the first cell to the terminal device, wherein the configuration information comprises one or more of the following: the identifier of the first cell, synchronization signal/physical broadcast channel block SSB information corresponding to the first cell, and random access information of the first cell, wherein

the SSB information corresponding to the first cell comprises one or more of the following: an SSB set, an SSB periodicity, or SSB transmit power; and

the random access information of the first cell comprises one or more of the following: random access preamble information, random access channel occasion information, or an association relationship between an SSB and a random access channel occasion.

51. The apparatus according to any one of claims 48 to 50, wherein the processing unit is further configured to:
receive a first uplink signal in the first cell based on the first TA, wherein the first uplink signal is transmitted by using a TA corresponding to the first cell.

52. The apparatus according to claim 51, wherein when a control resource set pool index corresponding to the first uplink signal is equal to a first value, the first uplink signal is transmitted by using the TA corresponding to the first cell; or when a cell identifier comprised in a transmission configuration indicator state TCI-state corresponding to the first uplink signal is the identifier of the first cell, the first uplink signal is transmitted by using the TA corresponding to the first cell.

53. The apparatus according to any one of claims 48 to 52, wherein

the processing unit is further configured to determine a TA change amount of the first cell; and
the transceiver unit is further configured to send second information to the terminal device, wherein the second information indicates the TA change amount of the first cell.

54. The apparatus according to claim 53, wherein that the second information indicates the TA change amount of the first cell comprises:

if a timing advance group TAG identity in the second information is a first TAG identity, a TA change amount indicated by the second information is the TA change amount of the first cell;
if a logical channel identifier LCID corresponding to the second information is a first LCID, a TA change amount indicated by the second information is the TA change amount of the first cell;
if a control resource set pool index corresponding to the second information is equal to a second value, a TA change amount indicated by the second information is the TA change amount of the first cell; or
if a cell identifier in the second information is the identifier of the first cell, a TA change amount indicated by the second information is the TA change amount of the first cell.

55. The apparatus according to claim 54, wherein

the first TAG identity is a TAG identity of a non-serving cell defined in a protocol; or
the first TAG identity is a TAG identity configured by a network device for a non-serving cell.

56. The apparatus according to any one of claims 48 to 55, wherein the first information comprises a first field, and the first field is used to select one non-serving cell from a plurality of configured non-serving cells; or the first field is used to select one cell from a plurality of configured non-serving cells and a cell through which the first information is sent.

57. The apparatus according to claim 56, wherein when a cell selected by using the first field is a non-serving cell, the non-serving cell is the first cell.

58. The apparatus according to any one of claims 48 to 55, wherein the first information comprises a second field, and the second field is used to select one cell from a cell through which the first information is sent and one currently active non-serving cell.

59. The apparatus according to claim 58, wherein when a cell selected by using the second field is the currently active non-serving cell, the currently active non-serving cell is the first cell.

60. The apparatus according to any one of claims 56 to 59, wherein
the first information comprises the first field or the second field when one or a combination of the following conditions is met:

the communication apparatus configures a non-serving cell for the terminal device;
the communication apparatus configures two control resource set CORESET groups for the terminal device;
the communication apparatus configures presence of the first field or the second; and
the communication apparatus configures that the terminal device uses lower layer signaling-based cell handover.

61. A communication apparatus, comprising a memory, a processor, and a transceiver, wherein

the memory is configured to store computer instructions;
the transceiver is configured to receive and send information or data; and
the processor, coupled to the memory, is configured to invoke the computer instructions in the memory, to perform the method according to any one of claims 1 to 17 via the transceiver.

62. A communication apparatus, comprising a memory, a processor, and a transceiver, wherein

the memory is configured to store computer instructions;
the transceiver is configured to receive and send information or data; and
the processor, coupled to the memory, is configured to invoke the computer instructions in the memory, to perform the method according to any one of claims 18 to 30 via the transceiver.

63. A computer-readable storage medium, wherein the computer-readable storage medium stores computer-executable instructions; and when the computer-executable instructions are invoked by a computer, the method according to any one of claims 1 to 17 is performed, or the method according to any one of claims 18 to 30 is performed.

64. A computer program product, comprising instructions, wherein when the instructions are run on a computer, the method according to any one of claims 1 to 17 is performed, or the method according to any one of claims 18 to 30 is performed.

65. A chip, wherein the chip is coupled to a memory, and is configured to read and execute program instructions stored in the memory, to implement the method according to any one of claims 1 to 17, or implement the method according to any one of claims 18 to 30.

FIG. 1

FIG. 2

FIG. 3

| TAG ID | Timing advance command (Timing advance command) |
|--------|------------------------------------------------|

FIG. 4

FIG. 5

| | |
|---|---|
| R | Timing advance command<br>(Timing advance command) |

| | |
|---|---|
| Timing advance command<br>(Timing advance command) | UL grant (Grant) |

| |
|---|
| UL grant (Grant) |

| |
|---|
| UL grant (Grant) |

| |
|---|
| UL grant (Grant) |

| |
|---|
| Temporary (Temporary) C-RNTI |

| |
|---|
| Temporary (Temporary) C-RNTI |

FIG. 6

~700

Communication apparatus

~701                     ~702

| Transceiver<br>unit | | Processing<br>unit |

FIG. 7

800

Communication apparatus

801

Transceiver

802

Processor

804

803

Memory

FIG. 8

900

Communication apparatus

901

Processor

903

Transceiver

Transmitter machine

9031

9032

Receiver machine

9033

902

Memory

Computer program code

FIG. 9

## INTERNATIONAL SEARCH REPORT

| International application No. |
|---|
| **PCT/CN2023/086981** |

### A.    CLASSIFICATION OF SUBJECT MATTER

H04W56/00(2009.01)i;H04W74/00(2009.01)i

According to International Patent Classification (IPC) or to both national classification and IPC

### B.    FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; VEN; CNKI; 3GPP: 邻区, 非服务小区, 随机接入, 前导码, 定时提前, 指示, 通知, neighbor cell, non-serving cell, RACH, preamble, TA, timing advance, indicate, DCI

### C.    DOCUMENTS CONSIDERED TO BE RELEVANT

| Category* | Citation of document, with indication, where appropriate, of the relevant passages | Relevant to claim No. |
|---|---|---|
| PX | WO 2023016332 A1 (HUAWEI TECHNOLOGIES CO., LTD.) 16 February 2023 (2023-02-16) description, page 17, line 39-page 35, line 31 | 1-65 |
| X | WO 2021141831 A1 (QUALCOMM INC.) 15 July 2021 (2021-07-15) description, paragraphs [0027]-[00150], and figures 2-5 | 1-65 |
| A | CN 113170416 A (HUAWEI TECHNOLOGIES CO., LTD.) 23 July 2021 (2021-07-23) entire document | 1-65 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 May 2023** | **06 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086981**

| Patent document cited in search report | | | Publication date (day/month/year) | Patent family member(s) | | | Publication date (day/month/year) |
|---|---|---|---|---|---|---|---|
| WO | 2023016332 | A1 | 16 February 2023 | None | | | |
| WO | 2021141831 | A1 | 15 July 2021 | BR | 112022013151 | A2 | 18 October 2022 |
| | | | | TW | 202130204 | A | 01 August 2021 |
| | | | | KR | 20220127240 | A | 19 September 2022 |
| | | | | US | 2021219255 | A1 | 15 July 2021 |
| | | | | EP | 4088516 | A1 | 16 November 2022 |
| CN | 113170416 | A | 23 July 2021 | None | | | |

**REFERENCES CITED IN THE DESCRIPTION**

**Patent documents cited in the description**

- CN 202210455597